# EUROPEAN PATENT APPLICATION

(11) **EP 2 712 522 A1**
(43) Date of publication of application: **02.04.2014**
(21) Application number: 13197359.6
(22) Date of filing: 10.12.2008
(51) Int. Cl.: A47F 3/00, B65D 5/52

(54) **A display unit assembly for presenting packaged products to the public, with optical and/or acoustic actuators**

(30) Priority: 19.12.2007 IT FI20070287
(62) Divisional of application: 08425787.2
(71) Applicant: Delicarta S.p.A., 55016 Porcari (LU) (IT)
(72) Inventor: Stefani, Emi, 55016 Porcari (LU) (IT)
(74) Representative: Mannucci, Michele

(57) **Abstract**

A display unit for packaged articles, such as boxes, packs of toilet paper, paper handkerchiefs and other disposable cellulose products, or other manufactured goods, with a back wall that projects above the products displayed to exhibit useful and/or advertising information, associated with which are light and/or sound means which are actuated through presence or proximity sensors and which are energized by the presence or approach of persons in proximity of the display unit.

## Description

### Technical Field

The present invention relates to a display unit, in particular but not exclusively for packaged articles such as rolls of toilet paper, rolls of kitchen towels, packs of napkins or handkerchiefs or other disposable cellulose articles, or for other packaged manufactured goods.

### State of the art

There are frequently used, to present to the public a group of packaged products, such as tins or packs of toilet paper or paper handkerchiefs, or the like, laminated display units which form an approximately horizontal supporting surface and a laminated part or back wall, which extends with respect to the group of products displayed, mainly above said group, to display useful and/or purely advertising information which may attract the public. Display units of this type are frequently used in shopping malls, supermarkets or the like. Usually, in addition to the back wall, side panels or walls are also connected to the base of the display unit, to protect the displayed product, so that the articles are visible and accessible to the public only from the front.

### Summary of the invention

According to one aspect, the invention provides a new type of display unit which has been designed to obtain increased attraction of the public. The display unit according to the invention is defined in claim 1. The dependent claims relate to additional embodiments.

According to the invention, for increasing the attraction of the public, light and/or sound means or devices are associated with the display unit, which are actuatable temporarily by presence or proximity sensors triggered by the presence or approach of persons in proximity of the display unit.

Light means or devices can be associated with said display unit, in particular combined with representations present on said display unit, especially in the part thereof projecting with respect to the displayed products. For example, a trademark associated with the product can be reproduced on the back wall, and this trademark can be combined with light devices which are visually integrated in the graphic representation of the trademark.

Timed switches can be combined with the light and/or sound devices to switch them off. Alternatively, the light and/or sound means or devices can be controlled to switch off when persons move away from the display unit assembly.

The presence sensors can be selected from the group including ultrasound sensors, capacitive sensors, infrared sensors, radio sensors and other sensors.

### Brief description of the drawings

The above mentioned and other objects and advantages will be apparent to those skilled in the art from reading the text below, which refers to a non-limiting embodiment described below with reference to the accompanying drawing, wherein:
Fig.1 shows in isolation a possible embodiment of a display unit to which the invention is applied;
Figs.2 and 3 show the display unit in a front view and in a side view according to the line III-III of Fig.2.

### Detailed description of an embodiment of the invention

In the example shown in the accompanying drawing, the numeral 1 generically indicates a laminated display unit, for example made of cardboard. In some embodiments the display unit comprises a back wall 1 A, at least one horizontal base 1 B and side panels or walls 1C to delimit a useful volume V, to display the products P to be displayed to the public, such as tins, various containers, packs of paper products (such as toilet paper, paper handkerchiefs or napkins or the like) or any product to be presented to the public and which the public can pick up. The back wall 1 A is generally extended to project from the overall dimension of the display area of the products. In some embodiments the back wall 1 A extends upward with a panel 1 E, commonly called "crowner". This forms a laminar element used to present to the public useful indications and information or even simply and especially an advertisement relevant to the products displayed or for other purposes. In some embodiments the panel 1 E is removable and is applied extemporarily to the back wall 1 A, when the display unit is positioned in the distribution center, store, supermarket or the like. During transport the panel 1 E is normally detached and possibly folded and is preferably placed on top of the assembly of products P which are packaged by the manufacturer directly inside the volume V defined by the walls 1C, 1 A, 1 B. A pallet can be provided to complete the packaging when this is of relevant dimensions.

It is evidently desirable to attract the attention of the public as much as possible, besides towards the products P displayed, also towards the content that appears on the front surface of the panel 1 E.

For this reason, according to the invention lights or light devices are caused to light up, preferably associated, combined or integrated with the graphic content of the front surface of the panel 1 E, and/or audio messages and/or illuminated messages are caused to be emitted, not permanently or intermittently at regular intervals, but preferably coincident with the approach and/or temporary presence or passage of persons in proximity of the display unit. This avoids costly and irritating permanent emission of light and/or audio messages, and temporary emission or generation is obtained when persons approach and are temporarily present in the area surrounding this display assembly, and/or in any case with a limited duration. This "dedicated" emission is also more effective than a continuous generation of light and sound, for the purpose of attracting the attention of potential purchasers. The light or sound devices can be powered by batteries even of low capacity, in view of the fact that the light and/or audio message is not continuous, but temporary and occasional. To reduce power consumption, in some embodiments LEDs or other low energy consumption light sources can be used as light devices.

The above is obtained by installing sensors, such as those indicated by way of example with S, which detect the approach of at least one person and cause temporary emission of light and/or audio messages as a result of the approach of a person. Sensors with this function, appropriately oriented, can be of any type, such as ultrasound, infrared, capacitive, radio or the like. One or more sensors can be provided, positioned or appropriately oriented to control the areas of possible approach of the public and as a function of the positioning of the display unit.

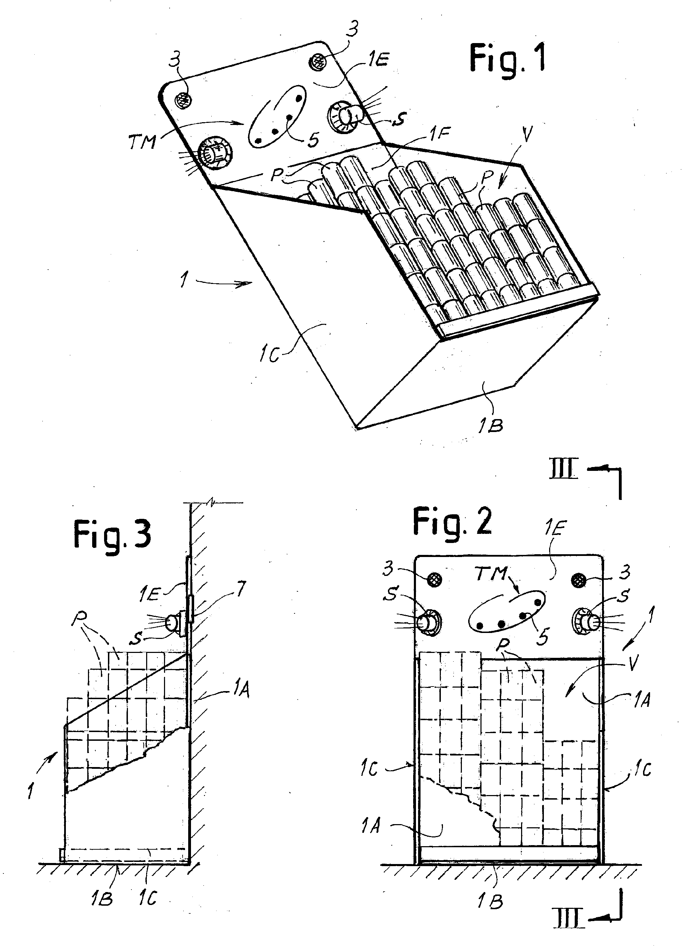

In the figures, reference numeral 3 generically and schematically indicates sound generators, of known type, represented in a dimension larger than the true dimension to facilitate comprehension of the drawing. Reference numeral 5 indicates light emitting diodes (LED) which in the example shown are schematically integrated in and are part of a generic trademark TM associated with the products P displayed. The sensors S, the light emitting diodes 5 and the sound emitters 3 are connected to an electronic circuit of known type or which in any case can be easily designed by those skilled in the art and which can be housed at the back of the panel 1 E, as indicated schematically with 7 in Fig. 3, or in another suitable position. The power supply batteries can be positioned in a similar manner. Preferably, all the electronic circuit components, including the sensor(s) S, the light device(s) 5 and the sound emitter(s) 3 are fastened to the panel 1 E, so that they can be removed together with the latter from a display unit both for easier and safer transport, and for possible re-use on a new display unit 1.

In general, the display unit 1 can be placed on the floor or on shelves, or wall hung or differently positioned. Typically, but not exclusively, the display unit can be of large dimensions and placed on a pallet that is positioned directly on the floor, for example in a shopping mall or supermarket, in the positioned desired to attract the public and induce a purchase.

It is understood that the drawing shows just one example, provided merely as a practical demonstration of the invention, which can vary in its forms and arrangements, without however departing from the scope of the concept underlying the invention. For example, the light devices can be applied to a portion of the back wall that projects laterally with respect to the side panels 1C of the display unit, or in another suitable position. The presence of any reference numerals in the appended claims has the sole purpose of facilitating reading of the claims in the light of the preceding description and of the accompanying drawings and does not in any way limit the scope of protection defined by the claims.

## Claims

1. A display unit for displaying a group of packaged products, comprising a volume to house the products to be displayed, including at least one light and/or sound device, actuatable through at least one sensor which detects the presence and/or approach of persons in front of the display unit; **characterized in that** it includes back wall (1A), at least one horizontal base (1 B) and side walls (1 C) to delimit a useful volume (V) to display the products P, the assembly of products (P) being packaged by the manufacturer directly inside said volume (V) defined by the walls and said base (1 C, 1 A, 1 B), said walls and said base being made of laminar material.

2. Display unit as claimed in claim 1, **characterized in that** it comprises a laminar element projecting from said volume and bearing indications relating to the product displayed in the display unit.

3. Display unit as claimed in claim 2, **characterized in that** said at least one light device is carried by said projecting laminar element.

4. Display unit as claimed in claim 3, **characterized in that** said at least one light device is integrated in a graphic design reproduced on said laminar element.

5. Display unit as claimed in claim 2 or 3, **characterized in that** all the light or sound devices, the sensor or sensors and the electronic circuits to control said devices and sensors are carried by said laminar element.

6. Display unit as claimed in one or more of claims 2 to 5, **characterized in that** said laminar element is removable and fastenable to a back wall of the display unit.

7. Display unit as claimed in one or more of the preceding claims, **characterized in that** it is made of cardboard.

8. Display unit as claimed in at least one or more of the preceding claims, **characterized in that** said at least one light and/or sound device is associated with a time switch for switching off.

9. Display unit as claimed in at least one or more of the preceding claims, **characterized in that** said at least one light and/or sound device is controlled to switch off when persons move away from the display unit.

10. Display unit as claimed in at least one or more of the preceding claims, **characterized in that** said at least one sensor is composed of a sensor chosen from the group containing: ultrasound sensors, capacitive sensors, radio sensors or combinations thereof.
